# DEMANDE DE BREVET EUROPEEN

(11) **EP 3 372 127 A1**
(43) Date de publication de la demande: **12.09.2018**
(21) Numéro de dépôt: 18160206.1
(22) Date de dépôt: 06.03.2018
(51) Int. Cl.: A47J 37/07

(54) **APPAREIL DE CUISSON AVEC RAMPE D APPROVISIONNEMENT**

(30) Priorité: 07.03.2017 FR 1751854
(71) Demandeur: Inovalp, 38350 Susville (FR)
(72) Inventeur: DENANCE, Yann, 38350 NANTES EN RATTIER (FR); PAULIN, Kevin, 38770 MONTEYNARD (FR); FAIVRE, Elodie, 38350 LA MURE (FR)
(74) Mandataire: GIE Innovation Competence Group

(57) **Abrégé**

Cet appareil de cuisson comporte :
- un conduit de combustion (2), présentant une première zone d'extrémité (20) et une seconde zone d'extrémité (21) opposée, et s'étendant suivant un axe longitudinal (Z'-Z) ;
- des moyens d'alimentation, agencés pour alimenter en air le conduit de combustion (2) ;
- une cuve, montée sur la première zone d'extrémité (20) du conduit de combustion (2) ;
- une grille de combustion (4), agencée dans la seconde zone d'extrémité (21) du conduit de combustion (2) de manière à supporter des granulés de bois et autoriser un passage des cendres issues de la combustion ;
remarquable en ce qu'il comporte une rampe (5) d'approvisionnement, agencée en périphérie du conduit de combustion (2), et présentant une première extrémité (50) adaptée pour recevoir des granulés de bois et une seconde extrémité (51) opposée débouchant sur la grille de combustion (4) ; et en ce que la rampe (5) d'approvisionnement s'étend suivant une première direction (Y'₁-Y₁), oblique par rapport à l'axe longitudinal (Z'-Z) du conduit de combustion (2), de manière à approvisionner la grille de combustion (4) en granulés de bois par gravité.

## Description

### Domaine technique

L'invention se rapporte au domaine technique des appareils de cuisson, plus particulièrement du type comportant un brûleur à granulés de bois.

L'invention trouve notamment son application dans la cuisson d'extérieur avec l'obtention d'appareils de cuisson de type plancha ou barbecue.

### Etat de la technique antérieure

Un appareil de cuisson connu de l'état de la technique, comporte :
- un conduit de combustion, présentant une première zone d'extrémité et une seconde zone d'extrémité opposée, et s'étendant suivant un axe longitudinal ;
- des moyens d'alimentation, agencés pour alimenter en air le conduit de combustion ;
- une cuve, montée sur la première zone d'extrémité du conduit de combustion ;
- une grille de combustion, agencée dans la seconde zone d'extrémité du conduit de combustion de manière à supporter des granulés de bois et autoriser un passage des cendres issues de la combustion.

Un tel appareil de cuisson de l'état de la technique utilise un brûleur à granulés de bois, formé par le conduit de combustion et la grille de combustion. Un brûleur à granulés de bois est avantageux notamment en termes de rendement et de facilité d'utilisation. Dans le cas d'un appareil de cuisson de type plancha, la cuisson s'effectue par conduction de la chaleur produite par le brûleur. Dans le cas d'un appareil de cuisson de type barbecue, la cuisson s'effectue par convection de la chaleur produite par le brûleur. La chaleur est issue de la combustion des granulés de bois (combustible) avec le dioxygène de l'air (comburant), réaction chimique exothermique. La cuve permet de répartir les fumées sur la plaque de cuisson.

Un tel appareil de cuisson de l'état de la technique n'est pas entièrement satisfaisant dans la mesure où il a été constaté une combustion incomplète des granulés de bois au fur et à mesure de leur combustion, c'est-à-dire au fur et à mesure de la descente des granulés de bois dans le conduit de combustion. Cette combustion incomplète des granulés de bois est préjudiciable non seulement en termes d'efficacité, mais aussi dans la mesure où cette combustion incomplète génère beaucoup de résidus à la fin de la combustion, sous forme de charbon et de granulés non brûlés entièrement.

En outre, l'approvisionnement du conduit de combustion en granulés de bois ne peut s'opérer qu'avant ou après la cuisson, via la cuve. Il n'est donc pas possible (ou alors extrêmement dangereux) de réapprovisionner le conduit de combustion via la cuve au fur et à mesure de la combustion des granulés de bois, c'est-à-dire au fur et à mesure de la descente des granulés de bois dans le conduit de combustion. En particulier, un ajout de granulés pardessus la flamme existante risque d'étouffer la flamme et de produire beaucoup de fumées.

### Exposé de l'invention

L'invention vise à remédier en tout ou partie aux inconvénients précités. A cet effet, l'invention a pour objet un appareil de cuisson, comportant :
- un conduit de combustion, présentant une première zone d'extrémité et une seconde zone d'extrémité opposée, et s'étendant suivant un axe longitudinal ;
- des moyens d'alimentation, agencés pour alimenter en air le conduit de combustion ;
- une cuve, montée sur la première zone d'extrémité du conduit de combustion ;
- une grille de combustion, agencée dans la seconde zone d'extrémité du conduit de combustion de manière à supporter des granulés de bois et autoriser un passage des cendres issues de la combustion ;
l'appareil de cuisson étant remarquable en ce qu'il comporte une rampe d'approvisionnement, agencée en périphérie du conduit de combustion, et présentant une première extrémité adaptée pour recevoir des granulés de bois et une seconde extrémité opposée débouchant sur la grille de combustion ; et en ce que la rampe d'approvisionnement s'étend suivant une première direction, oblique par rapport à l'axe longitudinal du conduit de combustion, de manière à approvisionner la grille de combustion en granulés de bois par gravité.

Ainsi, un tel appareil de cuisson selon l'invention permet de réapprovisionner en granulés de bois le conduit de combustion aisément par gravité, sans intervention dangereuse pour l'utilisateur. En effet, la rampe d'approvisionnement s'étend en périphérie du conduit de combustion, et donc sur une partie latérale de l'appareil de cuisson. L'utilisateur peut réapprovisionner le conduit de combustion en cours de combustion, ce qui n'est pas possible dans l'état de la technique sans risquer d'étouffer la flamme et de produire beaucoup de fumées. De plus, l'utilisateur n'a pas à s'approcher de la cuve où s'échappent les fumées pour réapprovisionner le conduit de combustion. La rampe d'approvisionnement forme des moyens de guidage des granulés de bois vers la grille de combustion.

En outre, un tel agencement de la rampe d'approvisionnement, débouchant sur la grille de combustion, permet de confiner les granulés de bois dans la seconde zone d'extrémité du conduit de combustion. Il est ainsi beaucoup plus aisé d'obtenir une combustion complète des granulés de bois par rapport à l'état de la technique où une perte de flamme est susceptible d'être occasionnée lors de la descente des granulés de bois dans le conduit de combustion au fur et à mesure de leur combustion.

L'appareil de cuisson selon l'invention peut comporter une ou plusieurs des caractéristiques suivantes.

Selon une caractéristique de l'invention, la première direction et l'axe longitudinal forment un angle aigu inférieur ou égal à 45°, de préférence compris entre 20° et 45°, plus préférentiellement compris entre 30° et 45°.

Ainsi, un avantage procuré est d'obtenir un guidage efficace par gravité (vitesse d'écoulement satisfaisante) des granulés de bois vers la seconde zone d'extrémité du conduit de combustion grâce à un angle inférieur ou égal à 45°. Plus l'angle sera faible, meilleur sera l'efficacité du guidage par gravité. En outre, plus l'angle sera faible, plus l'encombrement latéral de la rampe d'approvisionnement sera réduit. Toutefois, l'angle ne sera pas choisi trop faible afin de conserver une distance suffisamment importante avec la cuve pour ne pas être gêné par l'évacuation des fumées lors du réapprovisionnement. Par conséquent, un angle compris entre 20° et 45°, de préférence compris entre 30° et 45°, permet d'obtenir un excellent compromis entre efficacité de guidage, encombrement latéral, et distance avec la cuve.

Selon une caractéristique de l'invention, la grille de combustion s'étend dans la seconde zone d'extrémité du conduit de combustion suivant une seconde direction, oblique par rapport à l'axe longitudinal du conduit de combustion, la seconde direction étant sensiblement parallèle à la première direction.

Par « sensiblement parallèle », on entend un parallélisme avec une tolérance de ±15°.

Ainsi, un avantage procuré est d'améliorer l'homogénéité de l'occupation des granulés de bois à la surface de la grille de combustion.

Selon une caractéristique de l'invention, la rampe d'approvisionnement présente un contour fermé de manière à former un conduit d'approvisionnement.

Par « contour », on entend la surface extérieure reliant les première et seconde extrémités de la rampe d'approvisionnement.

Ainsi, un avantage procuré est de faciliter le guidage et par là-même l'approvisionnement en granulés de bois par l'utilisateur. En outre, un contour fermé permet d'augmenter la surface de contact avec le conduit de combustion, et donc d'améliorer la tenue mécanique pour la fixation au conduit de combustion, par exemple par soudage. Enfin, un contour fermé permet d'éviter une remontée de la combustion par la rampe d'approvisionnement. En ayant un contour fermé et en bouchant la première extrémité de la rampe d'approvisionnement, il n'y a pas d'air donc pas de combustion possible.

Selon une caractéristique de l'invention, l'appareil de cuisson comporte un ensemble de couronnes d'orifices ménagé en périphérie du conduit de combustion, les moyens d'alimentation étant agencés pour alimenter en air le conduit de combustion à travers l'ensemble de couronnes d'orifices ; l'ensemble de couronnes d'orifices comportant une couronne d'orifices supérieure agencée à une distance, notée h, de la première zone d'extrémité du conduit de combustion, la distance h étant déterminée selon le tirage thermique souhaité.

Par « couronne d'orifices », on entend des orifices répartis en périphérie du conduit de combustion selon un plan transversal au conduit de combustion. Par « transversal », on entend suivant une direction perpendiculaire à l'axe longitudinal.

Ainsi, un avantage procuré est d'ajuster la hauteur de la couronne d'orifices supérieure (le haut de l'empilement des granulés de bois s'étendant en permanence dans le conduit de combustion au niveau de la couronne supérieure), et ce afin d'obtenir le tirage souhaité.

Selon une caractéristique de l'invention, la seconde extrémité du conduit d'approvisionnement débouche sur la couronne d'orifices supérieure.

Ainsi, un avantage procuré est de confiner les granulés de bois et le foyer de combustion dans la seconde zone d'extrémité du conduit de combustion.

Selon une caractéristique de l'invention, les moyens d'alimentation comportent un conduit d'alimentation agencé de sorte que le conduit d'alimentation et le conduit de combustion sont coaxiaux.

Ainsi, un avantage procuré est de pouvoir aisément alimenter en air le conduit de combustion par l'air se déplaçant entre le conduit d'alimentation et le conduit de combustion. En outre, un tel conduit d'alimentation en air permet de dissimuler le conduit de combustion pour des raisons esthétiques.

Selon une caractéristique de l'invention, le conduit d'alimentation et le conduit de combustion sont séparés d'une distance comprise entre 15 mm et 30 mm.

Ainsi, un avantage procuré par une telle distance de séparation est de limiter les pertes de charge sur l'entrée d'air pour apporter suffisamment d'air à la combustion, mais également ne pas avoir un volume d'air trop important qui réduirait la température du conduit de combustion.

Selon une caractéristique de l'invention, la grille de combustion est montée amovible dans la seconde zone d'extrémité du conduit de combustion.

Ainsi, un avantage procuré est de faciliter l'entretien de la grille de combustion.

Selon une caractéristique de l'invention, l'appareil de cuisson comporte un chariot sur lequel est monté le conduit de combustion.

Ainsi, un avantage procuré est d'obtenir un appareil de cuisson mobile, aisément transportable pour la cuisson d'extérieur.

### Brève description des dessins

D'autres caractéristiques et avantages apparaîtront dans l'exposé détaillé de différents modes de réalisation de l'invention, l'exposé étant assorti d'exemples et de référence aux dessins joints.

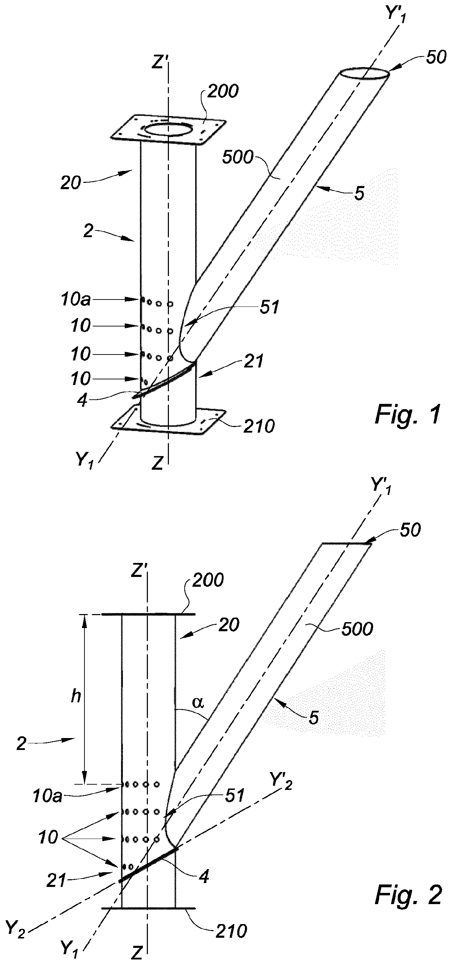

Figure 1 est une vue schématique partielle, en perspective de trois-quarts, d'un appareil de cuisson selon l'invention, illustrant un mode de réalisation de la rampe d'approvisionnement.
Figure 2 est une vue schématique partielle, de face, de l'appareil de cuisson illustré à la figure 1.

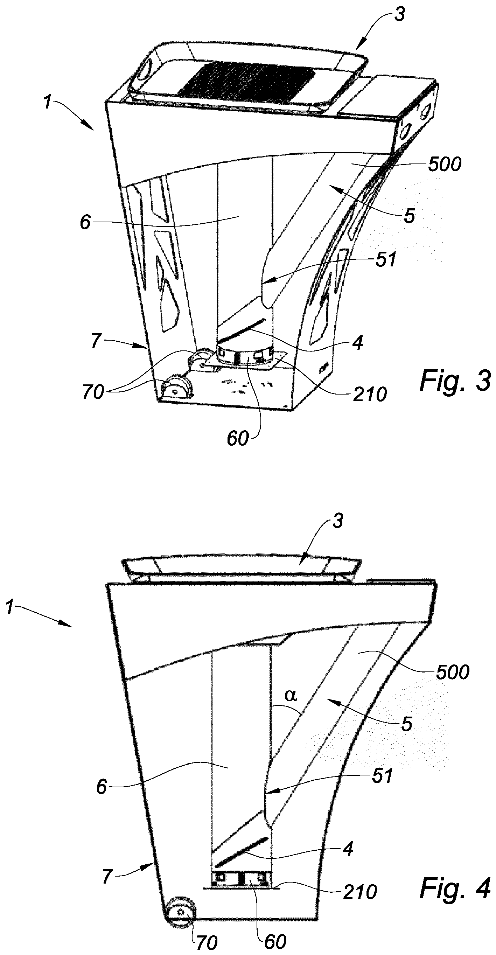

Figure 3 est une vue schématique, en perspective de trois-quarts, d'un appareil de cuisson selon l'invention.
Figure 4 est une vue schématique, de face, de l'appareil illustré à la figure 3.

### Exposé détaillé des modes de réalisation

Les éléments identiques ou assurant la même fonction porteront les mêmes références pour les différents modes de réalisation, par souci de simplification.

Un objet de l'invention est un appareil 1 de cuisson, comportant :
- un conduit de combustion 2, présentant une première zone d'extrémité 20 et une seconde zone d'extrémité 21 opposée, et s'étendant suivant un axe longitudinal Z'-Z ;
- des moyens d'alimentation, agencés pour alimenter en air le conduit de combustion 2 ;
- une cuve 3, montée sur la première zone d'extrémité 20 du conduit de combustion 2 ;
- une grille de combustion 4, agencée dans la seconde zone d'extrémité 21 du conduit de combustion 2 de manière à supporter des granulés de bois et autoriser un passage des cendres issues de la combustion.

L'appareil de cuisson comporte une rampe 5 d'approvisionnement, agencée en périphérie du conduit de combustion 2, et présentant une première extrémité 50 adaptée pour recevoir des granulés de bois et une seconde extrémité 51 opposée débouchant sur la grille de combustion 4. La rampe 5 d'approvisionnement s'étend suivant une première direction Y'₁-Y₁, oblique par rapport à l'axe longitudinal Z'-Z du conduit de combustion 2 de manière à approvisionner la grille de combustion 4 en granulés de bois par gravité.

### Conduit de combustion

Le conduit de combustion 2 présente la forme d'un tube. Le conduit de combustion 2 présente préférentiellement une section transversale circulaire. Par « transversale », on entend une section selon une direction perpendiculaire à l'axe longitudinal Z'-Z. A titre d'exemple non limitatif, le conduit de combustion 2 peut présenter un diamètre compris entre 90 mm et 153 mm.

La première zone d'extrémité 20 du conduit de combustion 2 est ouverte de manière à évacuer les fumées.

Le conduit de combustion 2 peut comporter :
- une plaque supérieure 200 montée sur la première zone d'extrémité 20 ;
- une plaque inférieure 210 montée sur la seconde zone d'extrémité 21.

La plaque inférieure 210 peut être montée libre. Selon une variante, la plaque inférieure 210 peut être fixée à une armature de l'appareil 1 de cuisson, telle qu'un chariot 7, pour améliorer la tenue mécanique du conduit de combustion 2.

L'appareil 1 de cuisson comporte avantageusement un ensemble de couronnes d'orifices 10, 10a ménagé en périphérie du conduit de combustion 2, les moyens d'alimentation étant agencés pour alimenter en air le conduit de combustion 2 à travers l'ensemble de couronnes d'orifices 10, 10a.

L'ensemble de couronnes d'orifices 10, 10a comporte avantageusement une couronne d'orifices supérieure 10a agencée à une distance, notée h, de la première zone d'extrémité 20 du conduit de combustion 2, la distance h étant déterminée selon le tirage thermique souhaité. A titre d'exemple non limitatif, la distance h peut être comprise entre 350 mm et 400 mm.

### Rampe d'approvisionnement

La première direction Y'₁-Y₁ et l'axe longitudinal Z'-Z forment avantageusement un angle aigu α inférieur ou égal à 45°, de préférence compris entre 20° et 45°, plus préférentiellement compris entre 30° et 45°.

La première extrémité 50 de la rampe 5 d'approvisionnement est préférentiellement fermée lors de la combustion car il faut éviter une remontée de la combustion par la rampe 5 d'approvisionnement. En fermant la première extrémité 50, il n'y a pas d'air donc pas de combustion possible. La première extrémité 50 de la rampe 5 d'approvisionnement n'est préférentiellement ouverte que pour le réapprovisionnement en granulés de bois.

La rampe 5 d'approvisionnement présente avantageusement un contour 500 fermé de manière à former un conduit d'approvisionnement 5. Le conduit d'approvisionnement 5 présente la forme d'un tube. Le conduit d'approvisionnement 5 présente préférentiellement une section transversale circulaire. Par « transversale », on entend une section selon une direction perpendiculaire à la première direction Y'₁-Y₁. A titre d'exemple non limitatif, le conduit d'approvisionnement 5 peut présenter un diamètre compris entre 40 mm et 150 mm.

La seconde extrémité 51 de la rampe 5 d'approvisionnement est ouverte. La seconde extrémité 51 du conduit d'approvisionnement 5 débouche avantageusement sur la couronne d'orifices supérieure 10a. Toutefois, bien entendu, la seconde extrémité 51 du conduit d'approvisionnement 5 peut déboucher à un niveau inférieur à la couronne d'orifices supérieure 10a. Dans les deux cas, la couronne d'orifices supérieure 10a doit s'étendre au-dessus du lit de granulés de bois, le lit de granulés s'étendant sur la grille de combustion 4.

L'appareil 1 de cuisson peut comporter une plaque agencée à proximité de la seconde extrémité 51 de la rampe 5 d'approvisionnement pour brider l'apport en granulés de bois au brûleur, et donc réduire la puissance de combustion.

### Grille de combustion

La grille de combustion 4 s'étend avantageusement dans la seconde zone d'extrémité 21 du conduit de combustion 2 suivant une seconde direction Y'₂-Y₂, oblique par rapport à l'axe longitudinal Z'-Z du conduit de combustion 2, la seconde direction Y'₂-Y₂ étant sensiblement parallèle à la première direction. Par « sensiblement parallèle », on entend un parallélisme avec une tolérance de ±15°. A titre d'exemple non limitatif, la seconde direction Y'₂-Y₂ et l'axe longitudinal Z'-Z peuvent former un angle aigu de 45°, et la première direction Y'₁-Y₁ et l'axe longitudinal Z'-Z peuvent former un angle aigu α de 30° afin de réduire l'encombrement latéral de l'appareil 1 de cuisson.

La grille de combustion 4 est avantageusement montée amovible dans la seconde zone d'extrémité 21 du conduit de combustion 2. Pour ce faire, une fente est ménagée en périphérie du conduit de combustion 2, dans la seconde zone d'extrémité 21. La grille de combustion 4 présente avantageusement une partie en saillie du conduit de combustion 2, permettant de retirer aisément la grille de combustion 4.

### Alimentation en air du conduit de combustion

Les moyens d'alimentation comportent avantageusement un conduit d'alimentation 6 agencé de sorte que le conduit d'alimentation 6 et le conduit de combustion 2 sont coaxiaux. Le conduit d'alimentation 6 présente préférentiellement une section transversale circulaire. A titre d'exemple non limitatif, le conduit d'alimentation 6 peut présenter un diamètre compris entre 140 mm et 160 mm.

Le conduit d'alimentation 6 et le conduit de combustion 2 sont avantageusement séparés d'une distance comprise entre 15 mm et 30 mm. Autrement dit, le conduit d'alimentation 6 et le conduit de combustion 2 sont avantageusement séparés d'une distance radiale comprise entre 15 mm et 30 mm.

Le conduit d'alimentation 6 est avantageusement muni d'une bague 60 montée mobile en rotation autour de l'axe longitudinal Z'-Z. La bague 60 permet de régler le débit d'air (et par là-même la puissance du brûleur) qui arrivera entre le conduit d'alimentation 6 et le conduit de combustion 2.

### Cuve

La cuve 3 est préférentiellement montée sur la première zone d'extrémité 20 du conduit de combustion 2 par vissage sur la plaque supérieure 200.

La cuve 3 peut présenter une section transversale trapézoïdale ou toute autre forme permettant de répartir de manière homogène les fumées issues de la combustion sur la plaque de cuisson.

### Appareil de cuisson

L'appareil 1 de cuisson comporte avantageusement un chariot 7 sur lequel est monté le conduit de combustion 2. Le chariot 7 est muni de roulettes 70 permettant d'obtenir un appareil 1 de cuisson mobile et transportable pour la cuisson d'extérieur.

L'appareil 1 de cuisson peut être de type plancha ou de type barbecue. L'ensemble comportant le conduit de combustion 2 et la grille de combustion 4 forme un brûleur à granulés de bois. Il est à noter que l'appareil de cuisson peut comporter plusieurs brûleurs.

Dans le cas d'un appareil 1 de cuisson de type plancha, la cuisson s'effectue par conduction de la chaleur produite par le brûleur. Dans le cas d'un appareil 1 de cuisson de type barbecue, la cuisson s'effectue pas convection de la chaleur produite par le brûleur. La chaleur est issue de la combustion des granulés de bois (combustible) avec le dioxygène de l'air (comburant), réaction chimique exothermique.

L'invention ne se limite pas aux modes de réalisation exposés. L'homme du métier est mis à même de considérer leurs combinaisons techniquement opérantes, et de leur substituer des équivalents.

## Revendications

1. Appareil (1) de cuisson, comportant :
- un conduit de combustion (2), présentant une première zone d'extrémité (20) et une seconde zone d'extrémité (21) opposée, et s'étendant suivant un axe longitudinal (Z'-Z) ;
- des moyens d'alimentation, agencés pour alimenter en air le conduit de combustion (2) ;
- une cuve (3), montée sur la première zone d'extrémité (20) du conduit de combustion (2) ;
- une grille de combustion (4), agencée dans la seconde zone d'extrémité (21) du conduit de combustion (2) de manière à supporter des granulés de bois et autoriser un passage des cendres issues de la combustion ;
l'appareil (1) de cuisson étant **caractérisé en ce qu'**il comporte une rampe (5) d'approvisionnement, agencée en périphérie du conduit de combustion (2), et présentant une première extrémité (50) adaptée pour recevoir des granulés de bois et une seconde extrémité (51) opposée débouchant sur la grille de combustion (4) ; et **en ce que** la rampe (5) d'approvisionnement s'étend suivant une première direction (Y'₁-Y₁), oblique par rapport à l'axe longitudinal (Z'-Z) du conduit de combustion (2), de manière à approvisionner la grille de combustion (4) en granulés de bois par gravité.

2. Appareil (1) de cuisson selon la revendication 1, dans lequel la première direction (Y'₁-Y₁) et l'axe longitudinal (Z'-Z) forment un angle aigu (α) inférieur ou égal à 45°, de préférence compris entre 20° et 45°, plus préférentiellement compris entre 30° et 45°.

3. Appareil (1) de cuisson selon la revendication 1 ou 2, dans lequel la grille de combustion (4) s'étend dans la seconde zone d'extrémité (21) du conduit de combustion (2) suivant une seconde direction (Y'₂-Y₂), oblique par rapport à l'axe longitudinal (Z'-Z) du conduit de combustion (2), la seconde direction (Y'₂-Y₂) étant sensiblement parallèle à la première direction (Y'₁-Y₁).

4. Appareil (1) de cuisson selon l'une des revendications 1 à 3, dans lequel la rampe (5) d'approvisionnement présente un contour (500) fermé de manière à former un conduit d'approvisionnement (5).

5. Appareil (1) de cuisson selon l'une des revendications 1 à 4, comportant un ensemble de couronnes d'orifices (10, 10a) ménagé en périphérie du conduit de combustion (2), les moyens d'alimentation étant agencés pour alimenter en air le conduit de combustion (2) à travers l'ensemble de couronnes d'orifices (10, 10a) ; l'ensemble de couronnes d'orifices (10, 10a) comportant une couronne d'orifices supérieure (10a) agencée à une distance, notée h, de la première zone d'extrémité (20) du conduit de combustion (2), la distance h étant déterminée selon le tirage thermique souhaité.

6. Appareil (1) de cuisson selon la revendication 5 en combinaison avec la revendication 4, dans lequel la seconde extrémité (51) du conduit d'approvisionnement (5) débouche sur la couronne d'orifices supérieure (10a).

7. Appareil (1) de cuisson selon l'une des revendications 1 à 6, dans lequel les moyens d'alimentation comportent un conduit d'alimentation (6) agencé de sorte que le conduit d'alimentation (6) et le conduit de combustion (2) sont coaxiaux.

8. Appareil (1) de cuisson selon la revendication 7, dans lequel le conduit d'alimentation (6) et le conduit de combustion (2) sont séparés d'une distance comprise entre 15 mm et 30 mm.

9. Appareil (1) de cuisson selon l'une des revendications 1 à 8, dans lequel la grille de combustion (4) est montée amovible dans la seconde zone d'extrémité (21) du conduit de combustion (2).

10. Appareil (1) de cuisson selon l'une des revendications 1 à 9, comportant un chariot (7) sur lequel est monté le conduit de combustion (2).
